# EUROPEAN PATENT APPLICATION

(11) **EP 1 632 885 A1**
(43) Date of publication of application: **08.03.2006**
(21) Application number: 05108203.0
(22) Date of filing: 07.09.2005
(51) Int. Cl.: G06K 17/00, G06K 19/077

(54) **Apparatus having a radio frequency identification tag**

(30) Priority: 07.09.2004 KR 2004071052
(71) Applicant: Samsung Electronics Co, Ltd, Suwon-si, Gyeonggi-do 442-742 (KR)
(72) Inventor: Park, Sang-cheol 137-702 Hwanggol Jugong, Suwon-si Gyeonggi-do (KR); Kim, Young-min 105-908 Hyundai Apt., Suwon-si Gyeonggi-do (KR)
(74) Representative: Walaski, Jan Filip

(57) **Abstract**

An appliance is provided having a housing (10) which receives and supports various components or units of the appliance. At least one RFID tag (70) is attached to a side of the housing. Various product-related information can be read from or written to the RFID tag using RF signals. The RFID tag is arranged in a position accessible from the outside of the housing by using an RFID reader/writer.

## Description

The present invention relates to apparatus, such as a printer, a photocopier or a fax machine, having a radio frequency identification (RFID) tag. More particularly, the present invention relates to an electronic appliance configured to have product-related information which can be read from or write to an RFID tag using radio frequency signals.

RFID is an automatic identification technology that enables contactless transfer of information at radio frequencies (RF). In the future, RFID technology is likely to replace bar codes and magnetic cards conventionally used for automatic identification.

Conventional RFID systems comprise a reader, a host computer and a tag, also referred to as a transponder. Upon entry by the tag into the electro-magnetic field produced by the reader antenna, the tag becomes activated and transmits an ID to the reader. The reader in turn transmits the ID to the host computer, which compares the ID with data pre-stored in a database and provides a desired service.

The use of RFID tags is rapidly increasing due to the advantages of RFID technology over existing bar code and self-recognition devices, the convenience of RFID systems, changes in the production methods of RFID tags, changes in consumer awareness, and cultural and technological progress and development.

In the past, a low frequency band (125 KHz - 400 KHz) has typically been employed for RFID applications requiring short-range transmission of information. However, the typical carrier frequency (i.e. the reader's transmitting frequency) range is between 125 KHz and 2.4 GHz. More recently, use of high frequency (4 MHz - 20 MHz) and microwave (2.45 GHz) signals has increased and a frequency band of 13.56 MHz is on the way to becoming standard.

RFID technology is being applied to the development of cartridges for image forming apparatus such as printers, copiers and fax devices. In such applications, information stored in a storage member of an RFID tag can, for instance, relate to life expectancy, the quantity of toner of a developing unit including the quantity of toner used by the developing unit, and the amount of paper remaining in or used by the image forming apparatus.

Because information relating to a developing cartridge can be transmitted using radio frequency signals, as described above, it is not necessary to provide a contact terminal or the like between a developing cartridge and a printer body. Therefore, the construction of the system may be simplified.

Most electronic appliances including printers and copiers are shipped in a packaged state. Information relating to such electronic appliances, such as model name, production date, production factory information and manufacturer information is arranged on the outer casing or body of the electronic appliances. Labels displaying product-related information are attached to the packaging of the electronic appliances for managing distribution or the like of the electronic appliances, since product-related information provided on the body of an appliance, as a result of the packaging, is not externally visible.

The use of labels has a number of drawbacks. For instance, in order to effectively manage the distribution of products, it becomes necessary to directly and visually read the labels to ascertain product-related information. Furthermore, there is also the disadvantage that it is difficult to ascertain the repair service history of electronic appliances since no record relating to after-sales servicing is available even if after-sale servicing has been performed.

The present invention aims to address the above problems.

According to the invention, there is provided apparatus comprising a housing, one or more components within the housing, the one or more components and the housing together forming a product, and a radio frequency identification RFID tag attached to the housing, wherein the RFID tag is arranged to store product related information.

In order to achieve the above-mentioned exemplary objects, there is provided an electronic appliance comprising a body frame which receives and supports, for example, various components or units of the electronic appliance, and at least one RFID tag attached to a side of the body frame. Various product related information may be read from or written into the RFID tag through RF communication.

According to an exemplary embodiment, the RFID tag is arranged in a position accessible from the outside of the body frame. For example, the RFID tag can be arranged in a position so that the information can be read from or written into the RFID tag, by using an RFID reader/writer, from the outside of the package after the product has been packaged.

In addition, a marking to indicate the position of the RFID tag can be provided, for example, on the packaging of the product.

According to an exemplary embodiment, the product-related information may be the information related to model name, production date, production factory information, manufacturer information, and after-sale servicing history, and the information can be either recorded at the time of assembling the product or changed in the packaged state when any of the information items is changed.

According to another exemplary aspect of the present invention, there is provided a method of assembling an electronic appliance having an RFID tag comprising the steps of assembling various components and units of the electronic appliance on a body frame of the appliance, and arranging an RFID tag on the body frame. Product-related information can be read from or written into the RFID tag. According to an exemplary aspect of the present invention, the function of the assembled product is tested, the external appearance is inspected, product-related information is input into the RFID tag using an RFID reader/writer, and the product is packaged.

According to an exemplary embodiment, a marking on the packaging to indicate the position of the RFID tag within the packaging can be provided during for example the step of packaging the product.

Still, according to another exemplary aspect of the present invention, there is also provided an image forming apparatus comprises an image forming unit including a photoconductive medium, an image transfer unit which transfers an image formed on the image forming unit to a printing medium, a fixation unit which fuses the image to the printing medium via heating and pressure, a body frame which receives and supports the above mentioned components, and at least one RFID tag arranged on a side of the body frame, wherein various product-related information can be read from or written into the RFID tag through RF communication.

According to an exemplary implementation the RFID tag is arranged in a position accessible from the outside of the body frame.

According to an exemplary implementation a marking to indicate the position of the RFID tag is provided on a package to enclose and maintain the image forming apparatus substantially in position.

The product-related information may be the information related to model name, production date, production factory information, manufacturer information, and or after-sale servicing history of the image forming apparatus.

An exemplary method of assembling such an image forming apparatus having an RFID tag as described above comprises the steps of assembling various components and units of the image forming apparatus including an image forming unit, an image transfer unit and a fixation unit to the body frame, attaching an RFID tag to a body frame, wherein product-related information can be read from or written into the RFID tag, testing the function of the assembled product, inspecting the external appearance of the product, inputting product-related information into the RFID tag using, for example, an RFID reader/writer, and packaging the product.

Embodiments of the invention will now be described by way of example with reference to the accompanying drawings, in which:
Figure 1 is a schematic view showing an image forming apparatus, which is an example of an electronic appliance with a readable/writeable RFID tag according to an embodiment of the present invention, in a packaged state;
Figure 2 is a schematic view showing an image forming apparatus, which is an example of an electronic appliance with a readable/writeable RFID tag according to another exemplary embodiment of the present invention; and
Figure 3 shows an example of a process of assembling an electronic appliance in accordance with the exemplary embodiments of the present invention.

Throughout the drawings, the same drawing reference numerals will be understood to refer to the same elements, features, and structures.

The matters defined in the description such as a detailed construction and elements are provided to assist in a comprehensive understanding of exemplary embodiments of the invention. Accordingly, those of ordinary skill in the art will recognize that various changes and modifications of the exemplary embodiments described herein can be made without departing from the scope of the invention as defined by the claims.

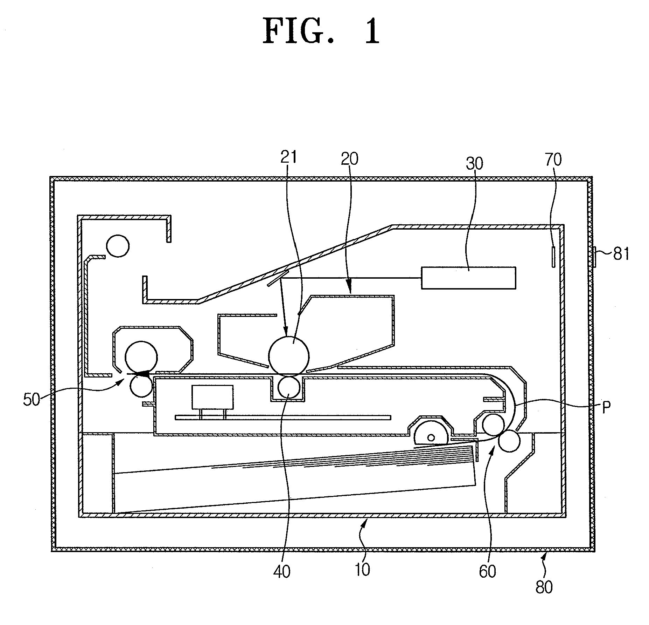

Figure 1 schematically shows an image forming apparatus as an example of an electronic appliance with an RFID tag according to the present invention in a packaged state. Although an image forming appliance is described by way of an example for the convenience of description in the following, the term "electronic appliance" may include any electric or electronic appliance as well as an image forming apparatus.

In Figure 1, a body frame 10, also referred to as a casing or housing, forms an external enclosure of an image forming apparatus. An exposure unit 20, a laser scanning unit 30, an image transfer unit 40, a fixation unit 50, a paper-feeding unit 60, an RFID tag 70, and a product package 80 with a marking 81 are provided.

The image forming unit 20 includes a photoconductive medium 21, also referred to as a photosensitive drum. Although not shown in detail in the drawing, the image forming unit 20 also includes a developing section. The laser scanning unit 30 emits a laser beam which forms an electrostatic latent image on the photoconductive medium 21 and the electrostatic image is developed into a visible image with toner by the developing section. The visible image is transferred to a printing medium, such as paper, fed from the paper-feeding unit 60 by the image transfer unit 40. Then, the image transferred to the printing medium is fused via application of heat and pressure while passing through the fixation unit 50. Lastly, the paper is discharged.

An RFID tag 70, according to an exemplary aspect of the present invention, is a memory means which allows product-related information, such as model name, production date, production factory information, manufacturer information, after-sales servicing history, or the like to be recorded thereon and read therefrom. According to an exemplary implementation, the RFID tag 70 is attached to a side of an inner wall of the body frame 10 as shown in Figure 1.

In an exemplary implementation, the RFID tag 70 is arranged in a position accessible from the outside of the body frame 10, for example, a position proximal to the outside of a package 80, so as to facilitate reading stored information from or writing new information to the RFID tag 70 using an RFID reader or writer from the outside of the package 80 after the product has been packaged.

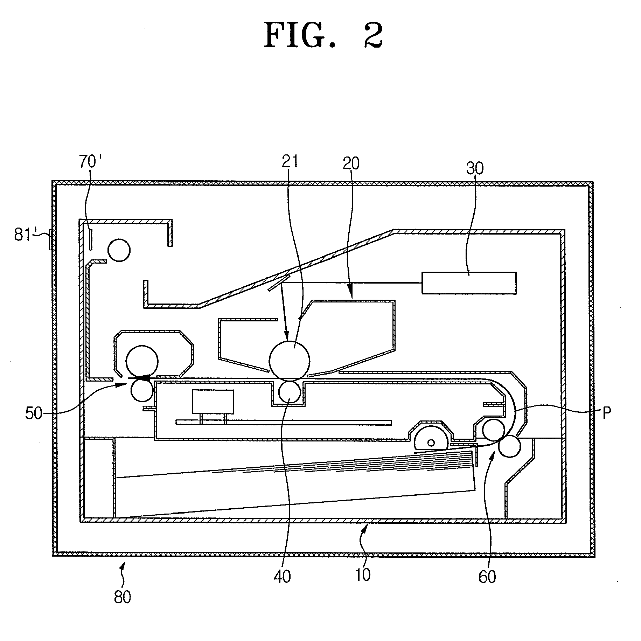

As shown in Figure 1, the RFID tag 70 is arranged on an area of the inner wall of the body frame 10 in the proximity of the laser scanning unit 30. In practice, this location may be preferable in image forming apparatuses because interference with other components is reduced and the location is proximal to the outside of the package 80. However, the RFID tag 70 may be attached to any position readily accessible from the outside of the apparatus, including, for example, a place on the inner wall adjacent to the paper-discharge part, as illustrated by the location of the RFID tag 70' shown in Figure 2. Additionally, if desired and suitable, more than one RFID tag 70 may be used.

RFID tags 70 or 70' may be classified as active tags or passive tags depending on whether the RFID tag 70 or 70' houses a battery. An active tag houses a battery and transmits a signal, for example, according to a predetermined time interval while the battery is in service. Although active tags are capable of remotely-transceiving a signal, they have limited use because of cost and restricted terms for use. In an exemplary embodiment, a passive tag is used, which, accordingly, is not provided with a battery. Passive tags comprise an antenna coil and a chip. If the tag enters an area of magnetic field radiated from a reader, AC voltage is induced in the antenna coil of the tag. The AC voltage is rectified by antenna circuitry to form a DC voltage, which is used to power the chip. When a predetermined level of voltage is applied to the chip, the chip activates and transmits data to the reader. The tag reading range is typically determined by the antenna circuitry and size of the antenna. Tags having a relatively short tag reading range of about 2 cm to 70 cm can be widely employed in the fields of product movement and distribution, manufacturing, traffic, and domestic animal management.

An RFID reader serves to supply RF energy to a passive tag, thereby activating the passive tag and receiving information from the tag. For this purpose, the reader includes an assembly for sending and receiving signals and decoding data. Additionally, the reader includes communication links such as, for example, series communication (RS-232), USB, or Ethernet or the like, for communicating with other devices such as a host computer. The RF transmitting assembly comprises an antenna circuit, an antenna tuning circuit and an RF carrier generator. The RF transmitting assembly can be designed, for example, to be tunable for optimal functioning of the antenna circuitry and the antenna itself. It is possible to obtain data by decoding a received signal through a microcontroller, wherein a firmware algorithm within the microcontroller sends an RF signal, interprets a received signal, and communicates with a host computer. According to an exemplary implementation, a reader has a reading function only. A device having both reading and writing functions is called an interrogator. The interrogator uses pulses containing a command when communicating with a tag for the purpose of those functions.

An antenna, for example, is a device employed for reading data from or writing a data to a tag or card using radio frequency waves. According to exemplary implementations, some systems separately use an antenna and a controller, while some systems comprise a combined antenna and controller, which are housed in a reader/writer.

According to another aspect of the present invention, a package 80 for packaging a product (for example, an assembled image forming apparatus) is marked with marking 81 or 81' for indicating the position where the RFID tag 70 or 70' of the packaged product is attached, as shown in Figures 1 and 2. Therefore, distribution personnel can recognize the position of the RFID tag and confirm product information using an RFID reader on this basis.

Assembling an electronic appliance product, such as, for example, an image forming apparatus, having an RFID tag as described above, comprises, for example, the steps of providing a readable/writable tag and inputting product-related information, such as, for example, model name, production date, production factory information, manufacturer information, after-sales servicing history, or the like into the tag before finally packaging the product.

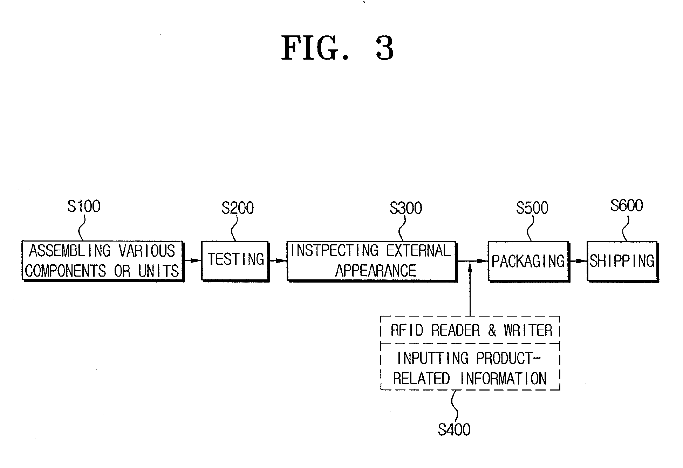

For example, as shown in Figure 3, an exemplary method of assembling an image forming apparatus comprises the steps of assembling various components including the image forming unit, the image transfer unit and the fixation unit on the body frame (S100), arranging an above-mentioned readable/writable RFID tag in an appropriate position on the body frame, testing the function of the product (for example, an image forming apparatus) assembled as described above (S200), inspecting the external appearance of the product (S300), and inputting product-related information into the RFID tag using an RFID reader/writer before the step of packaging the product (S500). Thereafter, the product is packaged and shipped (S600).

According to an exemplary implementation of an RFID tag, space is provided for storing the after-sales servicing history such as recurring problems with a particular item and servicing details, after the product is sold to a consumer. This information can facilitate management of the servicing of the product after sale.

According to an exemplary aspect of the present invention, in addition, it is possible to efficiently manage distribution from a viewpoint of product flow, because product-related information can be readily and accurately confirmed, even when the product is packaged. According to an exemplary aspect of the present invention, it is possible to record new product-related information when the product is in a packaged state, for example, when the product-related information has been changed.

According to an exemplary aspect of the present invention, because it is not necessary to attach a label, for indicating product-related information, to a package, it is possible to save costs and facilitate assembly of the product.

While the invention has been shown and described with reference to certain exemplary embodiments thereof, it will be understood by those skilled in the art that various changes in form and details may be made therein without departing from the scope of the invention as defined by the appended claims.

## Claims

1. Apparatus comprising:
a housing (10);
one or more components (20, 30, 40, 50, 60) within the housing (10), the one or more components and the housing together forming a product; and
a radio frequency identification RFID tag (70, 70') attached to the housing (10);
wherein the RFID tag (70, 70') is arranged to store product related information.

2. An appliance, comprising:
a body frame comprising at least one component in an interior of the body frame; and
at least one RFID tag attached to a side of the body frame, wherein product-related information is readable from or writeable into the RFID tag via RF communication.

3. An appliance as claimed in claim 2, wherein the RFID tag is arranged in a position accessible from an exterior of the body frame.

4. An appliance as claimed in claim 3, further comprising a package which encloses at least the body frame, the package comprising a marking indicative of the position of the RFID tag on an exterior of the package.

5. An appliance as claimed in claim 2, wherein the product-related information comprises at least one of model name, a production date, production factory information, manufacturer information, and after-sale servicing history.

6. The appliance as claimed in claim 2, further comprising:
an image forming unit which forms an image comprising an image transfer unit which transfers the image formed on the image to a printing medium;
a fixation unit which fuses the image to the printing medium via heat and pressure;
wherein the body frame comprises the image forming unit, the image transfer unit, and the fixation unit in the interior of the body frame.

7. The appliance as claimed in claim 6, wherein the RFID tag is arranged in a position accessible from an exterior of the body frame.

8. The appliance as claimed in claim 7, further comprising a package to encloses at least the body frame, the package comprising a marking indicative of the position of the RFID tag.

9. The appliance as claimed in claim 8, wherein the product-related information comprises at least one of model name, a production date, production factory information, manufacturer information, and after sale servicing history.

10. The appliance as claimed in claim 2, wherein the RFID tag is attached to a side of the body frame.

11. The appliance as claimed in claim 4, wherein the RFID tag is arranged on an exterior of the package.

12. The appliance as claimed in claim 2, wherein the appliance is an electrical appliance.

13. A method of assembling an appliance comprising an RFID tag, the method comprising the steps of:
providing at least one component in a body frame,
arranging an RFID tag on the body frame,
wherein product-related information is readable from or writeable into the RFID tag;
inputting the product-related information into the RFID tag; and packaging the product in a package.

14. A method as claimed in claim 13 further comprising step of:
providing a marking on the packaging indicative of a position of the RFID tag during the step of packaging the product.

15. A method as claimed in claim 14 wherein the marking is provided during the step of packaging the product.

16. A method as claimed in claim 13, wherein the product-related information comprises the inputting of at least one of a model name, a production date, production factory information, manufacturer information, and after-sale servicing history.

17. The method as claimed in claim 13 wherein the step of providing comprises the steps of:
providing an image forming unit;
providing an image transfer unit; and
providing a fixation unit.

18. The method as claimed in claim 17 wherein the image forming unit includes a photoconductive medium.

19. The method as claimed in claim 17 wherein the fixation unit fuses the image to the printing medium via heat and pressure.

20. A method as claimed in claim 13 further comprising the step of:
providing a marking on the packaging indicative of a position of the RFID tag during the step of packaging the product.

21. A method as claimed in claim 13, wherein the product-related information comprises at least one model name, a production date, production factory information, manufacturer information, and after sale servicing history.

22. A method as claimed in claim 13, wherein the step of providing includes the steps of:
testing the function of the assembled product; and
inspecting the external appearance of the product;
wherein the inputting step includes the inputting of the product-related information into the RFID tag using an RFID reader/writer.
